# EUROPÄISCHE PATENTSCHRIFT

(11) **EP 2 686 392 B1**
(45) Veröffentlichungstag und Bekanntmachung des Hinweises auf die Patenterteilung: **28.09.2016**
(21) Anmeldenummer: 12709017.3
(22) Anmeldetag: 09.03.2012
(51) Int. Cl.: C09D 11/00

(54) **PULVERLACKZUSAMMENSETZUNG ZUM STRUKTURIEREN UND TEXTURIEREN VON LACKOBERFLÄCHEN**
POWDER COATING COMPOSITION FOR STRUCTURING AND TEXTURING COATING SURFACES
COMPOSITION DE PEINTURE EN POUDRE POUR STRUCTURER ET TEXTURER DES SURFACES PEINTES

(30) Priorität: 17.03.2011 DE 102011014250
(43) Veröffentlichungstag der Anmeldung: 22.01.2014
(73) Patentinhaber: CLARIANT INTERNATIONAL LTD, 4132 Muttenz (CH)
(72) Erfinder: HERRLICH, Timo, 86444 Affing (DE); NIEDERLEITNER, Tobias, 86485 Feigenhofen (DE)
(74) Vertreter: Mikulecky, Klaus
(86) Internationale Anmeldenummer: PCT/EP2012/001051
(87) Internationale Veröffentlichungsnummer: WO 2012/123090

(56) Entgegenhaltungen:
- EP-A2- 1 661 953
- WO-A1-00/40630
- WO-A1-03/046029
- WO-A1-03/104330
- WO-A1-2008/119390
- DE-A1-102004 051 455
- US-A1- 2003 105 201

## Beschreibung

Die vorliegende Erfindung betrifft die Verwendung von Putverlackzusammensetzungen zum strukturieren bzw. texturieren von Lackoberflächen, was gleichzeitig zu einem verminderten Fließen während des Härtungsprozesses führt.

### Stand der Technik

Pulverlacke finden aufgrund ihrer leichten Handhabbarkeit und ihres geringen Lösungsmittelbedarfs und damit verbunden niedrigen Emission beim Lackieren eine zunehmende Bedeutung für Lackanwendungen. Durch geeignete Additive lassen sich pulverbasierende Lacksysteme sowohl glänzend als auch matt herstellen. Ein häufig auftretendes Problem insbesondere bei glänzenden Lackoberflächen ist das Hinterlassen von Fingerabdrücken beim alltäglichen Gebrauch. Allgemein wird dieses Problem gelöst durch die Generierung einer mattierten Oberfläche und/oder einer makroskopisch sichtbaren Oberflächenrauhigkeit. Diese wird erreicht durch den Einsatz von inerten und/oder (co-)reaktiven Zusatzstoffen. Im Zusammenhang mit makroskopischer Oberflächenrauhigkeit und deren morphologischen Eigenschaften wird auch von Strukturbildung oder Texturierung gesprochen. Die Strukturbildung zeigt sich in Form einer mehr oder weniger stark ausgeprägten Körnung der Oberfläche.

So beschreibt EP-A-1 661 953 die Verwendung von polar modifizierten Polyolefinwachsen zur Verbesserung der Haftung von Dichtstoffen. Die hier beschriebene Pulverlackzusammensetzung enthält säuregruppenhaltige Wachse (MSA-gepfropfte Licocene) sowie TiO₂ als basisches Metallsalz als auch für einen Pulverlacke übliches Bindemittelsystem.

Ferner beschreibt WO 03/104330 Wachsmischungen fein gemahlener Wachse, die auch säuregruppenhaltige Wachse enthalten können. Die Verwendung in Pulverlacken wird zwar benannt, aber es finden sich keine Hinweise auf eine Oberflächenstrukturierung, noch wird die dazu notwendige Mischung mit basischen Metalloxiden offenbart.

Generell lassen sich Pulverlacke nach ihrer Matrix bzw. ihrem Bindemittelsystem unterteilen in thermoplastische Pulverlacke (Polyethylen, Polyvinylchlorid, Polyamide, Ethylen-Vinylalkohol-Copolymere, thermoplastische Polyester) und vernetzende Pulverlacke (Epoxidharz, Epoxidharz-/Polyester-Hybridsysteme, reaktive Polyester). Thermoplastische Pulverlacke sind im Vergleich zu vernetzenden Pulverlacken preisgünstiger jedoch auch weniger beständig und werden daher meist für Innenlackierungen eingesetzt. Abhängig vom Bindemittelsystem lässt sich durch geeignete Wahl eines Mattierungsmittels oder eines Strukturbildners die Oberflächenmorphologie einstellen. Mattierungsmittel und Strukturbildner wirken dabei ganz ähnlich. Entscheidend ist dabei die Bildung einer mikroskopischen Oberflächenrauigkeit im Falle eines Mattierungsmittel bzw. einer makroskopischen Rauigkeit der Oberfläche bei einem Strukturbildner. Mattierungseffekte können dabei mittels Glanzmessung nach ISO 2813 bestimmt werden. Die charakteristischen Parameter einer makroskopisch sichtbaren Oberflächenrauhigkeit können dagegen nach ISO 4288 bestimmt werden. Diese Texturierung wird in der Praxis allerdings meist anhand von Referenzmustern rein qualitativ beurteilt.

Mattierungsmittel und Strukturbildner können im Pulverlack entweder als inerte oder als reaktive Zusatzstoffe vorliegen. Bekannte inerte Mattierungsmittel sind beispielsweise Kalk, Feldspat, pyrogene Kieselsäure, Kieselgur oder Polyolefinwachse. Mattierungsmittel deren Wirkung auf einer chemischen Reaktion beim Aushärten beruht, führen meist zu phasensepariert mit der Lackmatrix inkompatiblen Domänen. Beispielhaft hierfür sind bizyklischen Amidine für epoxidbasierte Pulverlacke oder Reaktionspartner mit unterschiedlicher Reaktivität im Vernetzungsprozess. Nachteilig für die Beständigkeit der so dargestellten mattierten Pulverlacke ist die damit verbundene Phasenseparation und somit der Zusammenhalt eines solchen Lacksystems.

Die Verwendung von semikristallinen Wachsen als Mattierungsmittel stellt eine besonders elegante Methode dar um Mattierungseffekte zu erzielen, da diese neben einem Mattierungseffekt zahlreiche andere Eigenschaften im Pulverlack verbessern (EP-A-0 890 619). Dazu gehören u. a. die Verbesserung der Kratzfestigkeit, der Abriebfestigkeit, der Dispergierung von Pigmenten, der Pigmentstabilität, des Gleitverhaltens, des Metallmarkings, der Blockfestigkeit sowie der Haptik. Daneben werden durch den Einsatz von Wachsen die rheologischen Eigenschaften des Pulverlacks positiv beeinflusst, wodurch Wachse bei Pulverlacken auch zur Durchsatzerhöhung bei Ihrer Herstellung im Extruder und als Entgasungsadditiv beim Einbrennprozess ihren Einsatz finden.

Auf einer ähnlichen Weise wie Mattierungsmittel wirken auch Strukturbildner. Bekannte inerte strukturbildende Additive sind u. a. pulverförmige PTFE (Polytetrafluorethylene) oder PVDF (Poylvinylidenfluorid) Polymere sowie anorganische Aluminumoxide. Jeno et al. beschreibt in EP0806459 den Einsatz von organophilen Tonen oder vernetzten Gummipartikeln als inerte Texturieradditive in epoxidbasierten Pulverlacken. Strukturbildung durch ein Reaktivsystem in epoxidbasierenden Pulverlacken erreichte Schreffler et al. (US-A-5,212,263) durch die Formulierung von Bisphenol A-Diglycidylether, Disalicylsäure und einem Imidazol-Derivat. Patel et al. (US-A-5,554,681) erreichte eine Oberflächenstrukturierung durch den Einsatz von vorvernetztem Silikonharz in Verbindung mit einem Acrylatharz und Kieselsäure als Fließverbesserer.

Nachteilig bei oben genannten Methoden ist der Einsatz der im Vergleich zu anderen Lackkomponenten teuren Rohstoffe wie z. B. PVDF und PTFE. Vorvernetztes und in der Regel elastisches Silikonharz stellt darüber hinaus besondere Anforderungen an den Mahlprozess dar, um die für den Pulverlack nötige Korngröße zu erhalten. Norris et al. (WO-0242385) beschreibt die Strukturbildung durch den Einsatz von mindesten 9 Gew.-% eines verzweigten, niedermolekularem Polyester mit endständigen Säuregruppen in Verbindung mit vorzugsweise einem epoxidfunktionellen Co-Reagenz. Der zum einen hohe Bedarf an niedermolekularen Reaktionspartnern und den damit verbundenen Schwierigkeiten im Extrusions- und Mahlprozess sowie die allgemein als gesundheitsschädlich eingestuften Reaktionspartner zeigt ein hohes Maß an Optimierbarkeit im Bereich der Strukturbildungsadditive für Pulverlacke.

Die oben genannten Pulverlackadditive zur Oberflächenstrukturierung erfüllen nicht in allen Aspekten die gewünschten anwendungstechnischen Anforderungen, vor allem im Hinblick auf deren Kosten in Herstellung und Weiterverarbeitung, geringer Flüchtigkeit und ihrer Nachhaltigkeit wie z. B. halogenfreier Rohstoffbasis.

Es wurde nun gefunden, dass säuregruppenhaltige Wachse in Verbindung mit basischen multivalenten basischen Metallsalzen zur Strukturbildung in Pulverlacken befähigt sind. Gleichzeitig wurde gefunden, dass die Kombination aus säuregruppenhaltiger Wachse und einer oder mehreren basischen Metallverbindungen dem Pulverlack beim Einbrennen aufgrund einer beschleunigten Schmelzverdickung (Thixotropie) eine besonders gute Verlaufsstabilität verleiht.

Die Erfindung betrifft die Verwendung einer Pulverlackzusammensetzung zur Erzeugung einer texturierten/strukturierten Lackoberfläche, bestehend aus einem
a) thermoplastischen oder duroplastischen Kunststoff als Bindemittelsystem,
b) einem Wachs mit einer Säurezahl im Bereich von 5 bis 135 mg KOH/g,
c) einer oder mehrerer basischen Metallverbindungen aus der Gruppe der Metalloxide, -carbonate, -hydroxide, -acetate, -phosphate oder -acetylacetonate.

Die Pulverlackzusammensetzung enthält somit säuregruppenhaltiger Wachse in Verbindung mit einer oder mehreren basischen Metallverbindungen oder SiO₂ zur Bildung strukturierter/texturierter Lackoberflächen bei Pulverlacken.

Als Bindemittelsystem für die erfindungsgemäßen Pulverlacksysteme können sowohl thermoplastische als auch duroplastische Polymere verwendet werden.

Bevorzugt liegt der Säuregehalt der eingesetzten Wachse zwischen 5 und 135 mg KOH/g.
Insbesondere bevorzugt werden die säuregruppenhaltigen Wachse, bezogen auf das Gesamtgewicht der Pulverlacke, in Mengen von 1 bis 6 Gew.-% eingesetzt.

In einer weiteren bevorzugten Ausführungsform werden die basischen Metallverbindung, bezogen auf das Gesamtgewicht der Pulverlacke, in Mengen von 5 bis 50 Gew.-% eingesetzt.
Insbesondere handelt es sich bei den säuregruppenhaltigen Wachsen um oxidierte Polyolefine, bevorzugt um mit Maleinsäureanhydrid gepfropfte Polyolefine (Homo- oder Copolymere) oder um Copolymerisate aus 1-Olefinen und Maleinsäureanhydrid.

Vorzugsweise bestehen die 1-Olefinen aus Kettenlängen mit ≥ 30 C-Atomen.

In einer weiteren bevorzugten Ausführungsform handelt es sich bei den säuregruppenhaltigen Wachsen um Copolymerisate aus Ethylen und Acrylsäure, vorzugsweise um mit Acrylsäure gepfropfte Polyolefine.

Bei den basischen Metallverbindungen werden vorzugsweise Metalloxide, -carbonate, -hydroxide, -acetate, -phosphate oder -acetylacetonate eingesetzt insbesondere Metalle und Halbmetalle aus der 2., 3., 4., und 5. Hauptgruppe sowie Übergangsmetalle aus den Nebengruppen 4 und 12.
Besonders bevorzugt werden dabei SiO₂, TiO₂ CaCO₃ und/oder ZnO.

Erfindungsgemäß verbessert die Additiv-Kombination säuregruppenhaltiger Wachse mit basischen Metallverbindungen die Struktur- bzw. Texturbildung an der Lackoberfläche von Pulverlacken, sowie gleichzeitig die rheologischen Eigenschaften beim Einbrennen, insbesondere die Thixotropierung.

Die vorliegende Erfindung ist für alle übliche Typen von Pulverlacken anwendbar, wie sie z. B. in Ullmanns Encyclopädie der technischen Chemie, 5. Ausgabe, Vol. A18, Seite 438 - 444, Verlag Chemie Weinheim 1991, beschrieben sind.

### Beispiele:

Bei der Herstellung des Pulverlackes werden alle Bestandteile zunächst in einem Mischer vorgemischt und anschließend in einem Extrusionsprozess bei Temperaturen zwischen 80 und 130 °C homogenisiert. Am Ende wird die homogene Masse mittels Vermahlung und Sichtung auf die gewünschte Kornfeinheit eingestellt. Bei diesem Prozess ist eine möglichst feine Verteilung der Pigmente und Füllstoffe erforderlich. Heutiger Stand der Technik zur Dispergierung aller Komponenten sind Ein- und Zweischneckenextruder, sowie Kneter ohne Dispergierhilfsmittel.

Das Aufbringen der gesichteten Partikel erfolgt mit Hilfe einer Sprühpistole mit Koronaaufladung. Die auf eine Metallplatte applizierten Partikel werden in einem Ofen für 15 Minuten bei 180 °C getempert. Dabei schmelzen die Partikel und bilden eine gleichmäßige Beschichtung. Nach diesem sogenannten Einbrennprozess werden die beschichteten Platten 24 Stunden in einem Klimaraum gelagert und anschließend der Glanz (60°) gemessen. Die Strukturbildung wird sowohl qualitativ beurteilt als auch anhand der Glanzwerte bestimmt. Aufgrund der strukturbildenden Eigenschaften der Mischung liegen die Glanzwerte in einem Bereich unterhalb von 60°.

**Tabelle 1: Charakteristische Kennzahlen der getesteten Wachse.**

| Produkt | Säurezahl | Viskosität | Tropfpunkt |
|---|---|---|---|
| maleiniertes PE Wachs | ca. 45 | ca. 350 (140 °C) | ca. 123 |
| PE Wachs | 0 | ca. 60 (140 °C) | ca. 127 |
| PP Wachs | 0 | ca. 60 (170 °C) | ca. 145 |
| maleiniertes PP Wachs | ca. 41 | ca. 1100 (170 °C) | ca. 140 |
| Copolymerwachs | ca. 80 | ca. 350 (100 °C) | ca. 73 |

Die genannten Wachskomponenten werden in einem Hybridpulverlack in folgendem Mischungsverhältnis zugegeben:

**Tabelle 2: Pulverlackzusammensetzung für die Hybridpulverlack.**

| Bestandteile | ohne Wachs | 2,0 Gew.-% Anteil | 4,0 Gew.-% Anteil |
|---|---|---|---|
| Crylcoat 1770-0 | 424,7 | 416,2 | 407,7 |
| D.E.R. 663U-E | 182,0 | 178,4 | 174,7 |
| Additol P 896 | 40,0 | 39,2 | 38,4 |
| Benzoin | 3,3 | 3,2 | 3,2 |
| Blancfixe F | 87,5 | 85,8 | 84,0 |
| Kronos 2160 (TiO₂) | 245,0 | 240,0 | 235,2 |
| PV-Echtblau A2R | 17,5 | 17,2 | 16,8 |
| Wachs | 0 | 20,0 | 40,0 |

Die Beispiele aus Tabelle 3 wurden nach den Formulierungen aus Tabelle 2 mit den entsprechenden Wachsen hergestellt.

**Tabelle 3: Variation der eingesetzten Wachse.**

| Produkte | Beispiele |
|---|---|
| ohne Wachs | 1 |
| maleiniertes PE Wachs | |
| 2% | 2 |
| 4% | 3 |
| PE Wachs | |
| 2% | 4 |
| 4% | 5 |
| PP Wachs | |
| 2% | 6 |
| 4% | 7 |
| maleiniertes PP Wachs | |
| 2% | 8 |
| 4% | 9 |
| Copolymerwachs | |
| 2% | 10 |
| 4% | 11 |

Die beschichteten Metallplatten wurden für 24 Stunden in einem Klimaraum gelagert und anschließend der Glanzwert bestimmt. Die Ergebnisse zeigen, dass sich der Glanzgrad nur in erhöhter Konzentration überproportional verringert. Dieser Effekt deckt sich mit der visuell sichtbaren makroskopischen Strukturbildung.

**Tabelle 4: Glanzmessung und qualitative Beurteilung**

| Beispiele | Glanz 60° | Erscheinung (Haptik) |
|---|---|---|
| Vergleichsbeispiel 1 | 97 | Glänzend (Glatt) |
| Erfindungsbeispiel 2 | 79 | Matt (Körnig) |
| Erfindungsbeispiel 3 | 42 | Matt (Körnig) |
| Vergleichsbeispiel 4 | 89 | Leicht mattiert (Glatt) |
| Vergleichsbeispiel 5 | 79 | Leicht mattiert (Glatt) |
| Vergleichsbeispiel 6 | 78 | Leicht mattiert (Glatt) |
| Vergleichsbeispiel 7 | 74 | Leicht mattiert (Glatt) |
| Efindungsbeispiel 8 | 70 | Matt (Körnig) |
| Erfindungsbeispiel 9 | 43 | Matt (Körnig) |
| Erfindungsbeispiel 10 | 75 | Matt (Körnig) |
| Erfindungsbeispiel 11 | 44 | Matt (Körnig) |

Die genannten Wachskomponenten wurden ebenfalls auf Basis eines Hybridpulverlackes mit einem erhöhten Anteil an Titandioxid untersucht:

**Tabelle 5: Pulverlackzusammensetzung für die Hybridpulverlacke mit erhöhtem Titandioxidanteil**

| Bestandteile | ohne Wachs | 2,0 Gew.-% Anteil | 4,0 Gew.-% Anteil |
|---|---|---|---|
| Crylcoat 1770-0 | 365,6 | 358,3 | 351,0 |
| D.E.R. 663U-E | 156,7 | 153,6 | 150,4 |
| Additol P 896 | 34,4 | 33,7 | 33,1 |
| Benzoin | 2,8 | 2,8 | 2,7 |
| Blancfixe F | 75,3 | 73,8 | 72,3 |
| Kronos 2160 (TiO₂) | 350,0 | 343,0 | 336,0 |
| PV-Echtblau A2R | 15,1 | 14,8 | 14,5 |
| Wachs | | 20,0 | 40,0 |

Folgende Mischungsverhältnisse liegen den Beispielen 12-22 zugrunde.

**Tabelle 6: Variation der eingesetzten Wachse**

| Produkte | Beispiele |
|---|---|
| ohne Wachs | 12 |
| modifiziertes PE Wachs | |
| 2% | 13 |
| 4% | 14 |
| PE Wachs | |
| 2% | 15 |
| 4% | 16 |
| PP Wachs | |
| 2% | 17 |
| 4% | 18 |
| modifiziertes PP Wachs | |
| 2% | 19 |
| 4% | 20 |

| Copolymerwachs | |
|---|---|
| 2% | 21 |
| 4% | 22 |

**Tabelle 7: Glanzmessung und qualitative Beurteilung**

| Beispiele | Glanz 60° | Erscheinung (Haptik) |
|---|---|---|
| Vergleichsbeispiel 12 | 90 | Glänzend (Glatt) |
| Erfindungsbeispiel 13 | 12 | Matt (Stark körnig) |
| Erfindungsbeispiel 14 | 2 | Matt (Stark körnig) |
| Vergleichsbeispiel 15 | 88 | Glänzend (Glatt) |
| Vergleichsbeispiel 16 | 83 | Leicht mattiert (Glatt) |
| Vergleichsbeispiel 17 | 85 | Leicht mattiert (Glatt) |
| Vergleichsbeispiel 18 | 80 | Leicht mattiert (Glatt) |
| Erfindungsbeispiel 19 | 53 | Matt (Körnig) |
| Erfindungsbeispiel 20 | 15 | Matt (Stark körnig) |
| Erfindungsbeispiel 21 | 15 | Matt (Stark körnig) |
| Erfindungsbeispiel 22 | 7 | Matt (Stark körnig) |

Es konnte erfindungsgemäß gezeigt werden, dass die Pulverlacke mit säuregruppenhaltigen Wachsen (insbesondere mit Maleinsäureanhydid gepfropfte Wachse) in Verbindung mit TiO₂ eine besonders starke Strukturbildung aufweisen. Darüber hinaus konnte erfindungsgemäß gezeigt werden, dass die Verlaufseigenschaften beim Einbrennprozess verbessert wurden.

Die Kombination säuregruppehaltiger Wachse, TiO₂ und Al(acac) oder CaCO3 und zeigte ebenfalls eine starke Strukturbildung. Folgende erfindungsgemäßen Formulierungen wurden mit verschiedenen Wachskonzentrationen getestet.

**Tabelle 8: Pulverlackzusammensetzung für die Hybridpulverlacke Säurewachs und Aluminiumacetylacetonat**

| Bestandteile | ohne Wachs | 4,0 Gew.-% Anteil | 6,0 Gew.-% Anteil | 8,0 Gew.-% Anteil |
|---|---|---|---|---|
| Crylcoat 1770-0 | 424,7 | 407,7 | 399,2 | 390,7 |
| D.E.R. 663U-E | 182,0 | 174,7 | 171,1 | 167,4 |
| Additol P 896 | 40,0 | 38,4 | 37,6 | 36,8 |
| Benzoin | 3,3 | 3,2 | 3,1 | 3,0 |
| Blancfixe F | 87,5 | 84,0 | 82,3 | 80,5 |
| Kronos 2160 | 245,0 | 235,2 | 230,3 | 225,4 |
| PV-Echtblau A2R | 17,5 | 16,8 | 16,5 | 16,1 |
| Wachs | | 20,0 | 20,0/40,0 | 40,0 |
| Aluminiumacetyacetonat | | 20,0 | 20,0/40,0 | 40,0 |

**Tabelle 9: Variation der eingesetzten Wachse**

| Produkte | Beispiele |
|---|---|
| ohne Wachs | 23 |
| modifiziertes PE Wachs 2% Aluminiumacetyacetonat 2% | 24 |
| modifiziertes PE Wachs 4% | 25 |
| Aluminiumacetyacetonat 2% | |
| modifiziertes PE Wachs 2% | 26 |
| Aluminiumacetyacetonat 4% | |
| modifiziertes PE Wachs 4% | 27 |
| Aluminiumacetyacetonat 4% | |

**Tabelle 10: Glanzmessung und qualitative Beurteilung**

| Beispiele | Glanz 60° | Erscheinung (Haptik) |
|---|---|---|
| Vergleichsbeispiel 23 | 96 | Glänzend (Glatt) |
| Erfindungsbeispiel 24 | 13 | Matt (Stark körnig) |
| Erfindungsbeispiel 25 | 9 | Matt (Stark körnig) |
| Erfindungsbeispiel 26 | 1 | Matt (Stark körnig) |
| Erfindungsbeispiel 27 | 1 | Matt (Stark körnig) |

**Tabelle 11: Pulverlackzusammensetzung für die Hybridpulverlacke Säurewachs und Calciumcarbonat**

| Bestandteile | ohne Wachs | 2,0 Gew.-% Anteil | 4,0 Gew.-% Anteil |
|---|---|---|---|
| Crylcoat 1770-0 | 368,0 | 359,0 | 350,0 |
| D.E.R. 663U-E | 158,0 | 154,0 | 150,0 |
| Additol P 896 | 35,0 | 34,0 | 33,0 |
| Benzoin | 3,0 | 3,0 | 3,0 |
| Blancfixe F | 76,0 | 74,0 | 72,0 |
| Durcal 5 (CaCO₃) | 345,0 | 344,0 | 344,0 |
| PV-Echtblau A2R | 15,0 | 15,0 | 14,0 |
| Wachs | | 17,0 | 34,0 |

**Tabelle 12: Variation der eingesetzten Wachse**

| Produkte | Beispiele |
|---|---|
| ohne Wachs | 28 |
| modifiziertes PE Wachs | |
| 2 % | 29 |
| 4 % | 30 |

**Tabelle 13: Glanzmessung und qualitative Beurteilung.**

| Beispiele | Glanz 60° | Erscheinung (Haptik) |
|---|---|---|
| Vergleichsbeispiel 28 | 72 | Glänzend (Glatt) |
| Erfindungsbeispiel 29 | 44 | Matt (Stark körnig) |
| Erfindungsbeispiel 30 | 27 | Matt (Stark körnig) |

**Tabelle 14: Thixotropierung beim Einbrennprozess**

| Beispiel | Lackstärke Mitte [mm] | Lackstärke Unterkante [mm] | Verlauf [%] |
|---|---|---|---|
| Vergleichsbeispiel 1 | 0,13 | 0,22 | 69 |
| Erfindungsbeispiel 3 | 0,12 | 0,16 | 33 |
| Vergleichsbeispiel 5 | 0,12 | 0,20 | 67 |
| Vergleichsbeispiel 7 | 0,11 | 0,18 | 63 |
| Erfindungsbeispiel 9 | 0,10 | 0,12 | 20 |

Es konnte erfindungsgemäß gezeigt werden, dass die Pulverlacke mit säuregruppenhaltigen Wachsen (insbesondere mit Maleinsäureanhydid gepfropfte Wachse) in Verbindung mit TiO₂ und Al(acac) oder CaCO3 eine besonders starke Strukturbildung aufweisen. Darüber hinaus konnte erfindungsgemäß gezeigt werden, dass die Verlaufseigenschaften beim Einbrennprozess verbessert wurden.

## Patentansprüche

1. Verwendung einer Pulverlackzusammensetzung zur Erzeugung einer texturierten/strukturierten Lackoberfläche bestehend aus einem
a) thermoplastischen oder duroplastischen Kunststoff als Bindemittelsystem,
b) einem Wachs mit einer Säurezahl im Bereich von 5 bis 135 mg KOH/g,
c) einer oder mehrerer basischen Metallverbindungen aus der Gruppe der Metalloxide, -carbonate, -hydroxide, -acetate, -phosphate oder -acetylacetonate.

2. Verwendung gemäß Anspruch 1, **dadurch gekennzeichnet, dass** das die Pulverlackzusammensetzung als Bindemittelsystem entweder einen thermoplastischen Kunststoff (Polyethylen, Polyvinylchlorid, Polyvinylidenefluorid, Polyamide, Ethylen-Vinylalkohol-Copolymere, thermoplastische Polyester) oder einen duroplastischen Kunststoff (Epoxidharz, Epoxidharz-/Polyester-Hybridsysteme, reaktive Polyester) enthält

3. Verwendung gemäß einem oder mehrerer vorhergehender Ansprüche, **dadurch gekennzeichnet, dass** das Wachs zu 1 bis 6 Gew.-% zugesetzt wird.

4. Verwenduna gemäß einem oder mehrerer vorhergehender Ansprüche, **dadurch gekennzeichnet, dass** die basische Metallverbindung zu 5 bis 50 Gew.-% zugesetzt wird.

5. Verwendung gemäß einem oder mehrerer vorhergehender Ansprüche, **dadurch gekennzeichnet, dass** das Wachs durch Maleinierung eines Polyolefin-Homo- oder -Copolymer entsteht.

6. Verwendung gemäß einem oder mehrerer vorhergehender Ansprüche, **dadurch gekennzeichnet, dass** das Wachs durch Copolymerisation aus Maleinsäureanhydrid und 1-Olefine mit einer Kettenlänge ≥ 30 C-Atomen entsteht.

7. Verwendung gemäß einem oder mehrerer vorhergehender Ansprüche, **dadurch gekennzeichnet, dass** das Wachs durch Copolymerisation aus Acrylsäure und Ethylen entsteht.

8. Verwendung gemäß einem oder mehrerer vorhergehender Ansprüche, **dadurch gekennzeichnet, dass** das Wachs durch Pfropfung eines Polyolefins mit Acrylsäure entsteht.

9. Verwendung gemäß Anspruch 1, **dadurch gekennzeichnet, dass** die basische Metallverbindung aus einem Metall der 2., 3., 4., 5. Hauptgruppe, bzw. ein Übergangsmetall der Nebengruppen 4 und 12 darstellt.

10. Verwendunggemäß den Ansprüchen 1 und 8, **dadurch gekennzeichnet, dass** die basische MetallverbindungTiO₂, CaCO₃ und / oder ZnO ist.

11. Verwendung gemäß einem oder mehreren vorhergehenden Ansprüchen, zur Verbesserung der rheologischen Eigenschaften von Lackoberflächen, insbesondere zur Thixotropierung beim Einbrennprozess.

## Claims

1. The use of a powder coating composition for generating a textured/structured coating surface, consisting of
a) a thermoplastic or thermosetting polymer as binder system,
b) a wax having an acid number in the range from 5 to 135 mg KOH/g;
c) one or more basic metal compounds from the group of metal oxides, carbonates, hydroxides, acetates, phosphates or acetylacetonates.

2. The use as claimed in claim 1, wherein the binder system comprised by the powder coating composition is either a thermoplastic polymer (polyethylene, polyvinyl chloride, polyvinylidene fluoride, polyamides, ethylene-vinyl alcohol copolymers, thermoplastic polyesters) or a thermosetting polymer (epoxy resin, epoxy resin/polyester hybrid systems, reactive polyesters).

3. The use as claimed in either or both preceding claims, wherein the wax is added at 1 to 6 wt%.

4. The use as claimed in one or more preceding claims, wherein the basic metal compound is added at 5 to 50 wt.%.

5. The use as claimed in one or more preceding claims, wherein the wax is formed by maleinization of a polyolefin homopolymer or copolymer.

6. The use as claimed in one or more preceding claims, wherein the wax is formed by copolymerization of maleic anhydride and 1-olefins having a chain length ≥ 30 C atoms.

7. The use as claimed in one or more preceding claims, wherein the wax is formed by copolymerization of acrylic acid and ethylene.

8. The use as claimed in one or more preceding claims, wherein the wax is formed by grafting of a polyolefin with acrylic acid.

9. The use as claimed in claim 1, wherein the basic metal compound represents from a metal from main group 2, 3, 4, or 5, or a transition metal from transition groups 4 and 12.

10. The use as claimed in claims 1 and 8, wherein the basic metal compound is Ti02, CaC03 and/or ZnO.

11. The use as claimed in one or more preceding claims, for improving the rheological properties of coating surfaces, more particularly for thixotroping during the baking operation.

## Revendications

1. Utilisation d'une composition de laque en poudre pour générer une surface de laque texturée/structurée, constituée par
a) un matériau synthétique thermoplastique ou thermodurcissable comme système de liant,
b) une cire présentant un indice d'acide dans la plage de 5 à 135 mg de KOH/g,
c) un ou plusieurs composés métalliques basiques du groupe des oxydes, des carbonates, des hydroxydes, des acétates, des phosphates ou des acétylacétonates métalliques.

2. Utilisation selon la revendication 1, **caractérisée en ce que** la composition de laque en poudre contient, comme système de liant, soit un matériau synthétique thermoplastique (polyéthylène, poly(chlorure de vinyle), poly(fluorure de vinylidène), polyamides, copolymères d'éthylène-alcool vinylique, polyester thermoplastique), soit un matériau synthétique thermodurcissable (résine époxyde, systèmes hybrides résine époxyde/polyester, polyester réactif).

3. Utilisation selon l'une ou plusieurs des revendications précédentes, **caractérisée en ce que** la cire est ajoutée à raison de 1 à 6 % en poids.

4. Utilisation selon l'une ou plusieurs des revendications précédentes, **caractérisée en ce que** le composé métallique basique est ajouté à raison de 5 à 50 % en poids.

5. Utilisation selon l'une ou plusieurs des revendications précédentes, **caractérisée en ce que** la cire est formée par maléinisation d'un homopolymère ou d'un copolymère de polyoléfine.

6. Utilisation selon l'une ou plusieurs des revendications précédentes, **caractérisée en ce que** la cire est formée par copolymérisation d'anhydride de l'acide maléique et de 1-oléfines présentant une longueur de chaîne ≥ 30 atomes de carbone.

7. Utilisation selon l'une ou plusieurs des revendications précédentes, **caractérisée en ce que** la cire est formée par copolymérisation d'acide acrylique et d'éthylène.

8. Utilisation selon l'une ou plusieurs des revendications précédentes, **caractérisée en ce que** la cire est formée par greffage d'une polyoléfine par de l'acide acrylique.

9. Utilisation selon la revendication 1, **caractérisée en ce que** le composé métallique basique représente par un métal du 2ème, 3ème, 4ème, 5ème groupe principal ou par un métal de transition du 4ème et 12ème groupe secondaire.

10. Utilisation selon les revendications 1 et 8, **caractérisée en ce que** le composé métallique basique est TiO₂, CaCO₃ et/ou ZnO.

11. Utilisation selon l'une ou plusieurs des revendications précédentes pour l'amélioration des propriétés rhéologiques de surfaces de laque, en particulier pour la thixotropisation lors d'un processus de cuisson.
